# FASCICULE DE BREVET EUROPEEN

(11) **EP 3 958 469 B1**
(45) Date de publication et mention de la délivrance du brevet: **31.01.2024**
(21) Numéro de dépôt: 21190798.5
(22) Date de dépôt: 11.08.2021
(51) Int. Cl.: H04B 1/38, H01P 3/16, H04B 1/40, H04B 3/52

(54) **SYSTEME POUR LA TRANSMISSION BIDIRECTIONNELLE DE SIGNAUX EN GUIDE D'ONDES PLASTIQUE**
SYSTEM ZUR BIDIREKTIONALEN ÜBERTRAGUNG VON SIGNALEN IN EINEM KUNSTSTOFFWELLENLEITER
SYSTEM FOR BI-DIRECTIONAL TRANSMISSION OF SIGNALS IN A PLASTIC WAVEGUIDE

(30) Priorité: 18.08.2020 FR 2008552
(43) Date de publication de la demande: 23.02.2022
(73) Titulaire: Commissariat à l'Energie Atomique et aux Energies Alternatives, 75015 Paris (FR)
(72) Inventeur: BELOT, Didier, 38054 GRENOBLE CEDEX 09 (FR); MARTINEAU, Baudouin, 38054 GRENOBLE CEDEX 09 (FR)
(74) Mandataire: Atout PI Laplace

(56) Documents cités:
- EP-A1- 3 453 071
- EP-B1- 3 453 071
- WO-A1-2018/125479
- US-A1- 2017 331 181
- US-A1- 2020 194 863
- VOINEAU FLORIAN ET AL: "A 12 Gb/s 64QAM and OFDM compatible millimeter-wave communication link using a novel plastic waveguide design", 2018 IEEE RADIO AND WIRELESS SYMPOSIUM (RWS), IEEE, 15 janvier 2018 (2018-01-15), pages 250-252, XP033325318, DOI: 10.1109/RWS.2018.8305001

## Description

### Domaine technique

L'invention concerne de manière générale les systèmes de transmission et en particulier un système basé sur un guide d'ondes plastique pour la transmission bidirectionnelle d'une pluralité de signaux entre un premier dispositif émetteur-récepteur et un second dispositif émetteur-récepteur.

### Art Antérieur

Les ondes ayant des fréquences comprises entre 1 GHz et 10 THz sont des rayonnements non-ionisants qui peuvent pénétrer une large gamme de matériaux non conducteurs tels que le bois, le plastique, les céramiques, et le papier. La transmission de telles ondes permet de nouvelles applications dans divers domaines techniques tels que la spectroscopie, la physique, les communications, l'imagerie, le médical, et la biologie.

Les guides d'ondes existants pour guider les ondes électromagnétiques dans d'autres domaines de fréquences peuvent ne pas être adaptés pour la propagation de telles ondes. Plusieurs solutions alternatives ont été proposées pour permettre la propagation de telles ondes. En particulier, des guides d'ondes en matière plastique ont été proposés dans:
- M. De Wit, Y. Zhang and P. Reynaert, "Analysis and Design of a Foam-Cladded PMF Link With Phase Tuning in 28-nm CMOS", in IEEE Journal of Solid-State Circuits, 2019;
- C. Jany, A. Siligaris, P. Ferrari, and P. Vincent, "A novel harmonie selection technique based on the injection of a periodically repeated oscillations train into an oscillator", IEEE MTT-S International Microwave Symposium (IMS2014), Tampa, FL, 2014, pp. 1-3;
- C. Jany, A. Siligaris, J.L. Jiménez, C. Bernier, P. Vincent, and P. Ferrari, "A novel ultra-low phase noise, programmable frequency multiplier-by-30 architecture. Application to 60-GHz frequency génération", ESSCIRC, 2014, pp. 427-430 ;
- F. Voineau, A. Ghiotto, and E. Kerhervé, "Ensemble pour la propagation d'ondes dans la gamme de fréquences comprises entre 1 GHz et 10 THz", Patent Registration, FR 16 54003, May 2016 ;
- F. Parment, A. Ghiotto, T. Vuong, J. Duchamp, and K. Wu, "Air-filled substrate integrated waveguide for low loss and high power handling millimeter-wave substrate integrated circuits", IEEE Transactions on Microwave Theory and Techniques, vol. 63, no. 4, pp. 1228-1238, Apr. 2015;
- M. Sawaby,N. dolatsha and A. Arbabian, "A Fully Packaged 130-GHz QPSK Transmitter With an Integrated PRBS Generator", in IEEE Solid-State Circuits Letters, 2018;
- N. Van Thienen, Y. Zhang, M. De Wit, P. Reynaert, "An 18Gbps Polymer Microwave Fiber (PMF) Communication Link in 40nm CMOS", ESSCIRC (ESSCIRC), Lausanne, 2016, et
- F. Voineau, C. Dehos, B. Martineau, M. Sié, M. Perchicot, N. H. Nguyen, A. Ghiotto and E.Kerhervé, "A 12 Gb/s 64QAM and OFDM Compatible Millimeter-Wave Communication Link Using a Novel Plastic Waveguide Design", IEEE Radio and Wireless Symposium (RWS), Anaheim, CA, 2018, pp. 250-252.

Les guides d'ondes plastiques forment des liens isolants thermiques qui permettent des transmissions radio large bande. Les technologies existantes, comprenant la technologie P-Link, offrent des liens très haut débit à large bande adaptés pour les réseaux des futures générations 5G et 6G et les applications aux systèmes de transport intelligents et aux véhicules autonomes. Les solutions ainsi développées à base de guide d'ondes plastique se basent sur des liens équilibrés à leurs extrémités, utilisant les mêmes émetteurs-récepteurs de chaque côté du lien. Ces solutions permettent de propager sans latence un seul signal transmis avec un équilibre de consommation d'énergie entre l'émetteur et le récepteur.

Les demandes de brevet US 2020/194863 A1 et WO 2018/125479 A1 proposent des solutions basées sur des dispositifs émetteur-récepteur équilibrés, avec un dispositif émetteur-récepteur actif de chaque côté du lien de transmission, qui est structurellement identique.

Contrairement à certains guides d'ondes existants, les solutions connues qui utilisent des guides plastiques permettent la propagation d'ondes ayant des fréquences porteuses comprises entre 30 GHz et 10 THz, les signaux utiles portés par ces fréquences porteuses étant compris entre 1 MHz et plusieurs dizaines de GHz voire plus selon la fréquence porteuse. Cependant, ces solutions à base de guide plastique ne permettent pas la transmission simultanée d'une pluralité de signaux et ne sont pas adaptées à certaines applications telles que l'adressage de Qubits dans une machine Quantique et l'Internet des objets noyés dans la matière. Les machines Quantiques se basent actuellement sur l'utilisation de câbles coaxiaux qui représentent des inconvénients en termes de coûts et d'efficacité énergétique. En effet, le nombre de câbles coaxiaux utilisés entre l'interface à température ambiante et l'interface cryogénique est très élevé, ce qui nuit à une intégration forte du système global. De plus, chaque câble coaxial étant constitué de conducteur thermique, il participe au réchauffement de la zone cryogénique, ce qui nuit fortement au rendement énergétique de la machine Quantique. Pour un grand nombre de Qubits, il peut en outre nuire au fonctionnement de la machine Quantique.

Il existe donc un besoin pour un système amélioré capable de propager des ondes ayant des fréquences comprises entre 1 GHz et 10 THz et adapté à la transmission bidirectionnelle d'une pluralité de signaux dans un environnement incompatible avec les transmissions radio.

### Définition Générale de l'invention

L'invention vient améliorer la situation. A cet effet, l'invention fournit un système tel que revendiqué dans la revendication indépendante.

Différents modes de réalisation sont revendiqués dans les revendications dépendantes.

Avantageusement, les modes de réalisation de l'invention fournissent un système de transmission basé sur un guide d'onde plastique offrant une multi-connectivité bidirectionnelle large bande, avec une émission d'une pluralité de signaux comprenant un signal utile et un ou plusieurs signaux sinusoïdaux de référence générés par un oscillateur local.

Avantageusement, les modes de réalisation de l'invention permettent de transporter dans un guide d'onde plastique, d'une façon simultanée et bidirectionnelle, des signaux porteurs d'informations utiles ainsi que des signaux sinusoïdaux de référence avec des fréquences différentes pour éviter des intermodulations.

Avantageusement, la transmission simultanée par radio d'un signal porteur d'information utile (la porteuse) et des sinusoïdes de référence (LOs) est une approche totalement contre-intuitive. En effet, en radio, les chemins de propagation sont différents, ce qui rend alors impossible une synchronisation de plusieurs signaux sur un récepteur. L'invention lève ce problème en transportant tous les signaux dans un même guide d'ondes plastique qui présente la propriété très intéressante de garder la synchronisation entre les signaux.

Dans un mode de réalisation avantageux, les fréquences différentes pour deux signaux sinusoïdaux de référence LO1 et LO2 peuvent être obtenues par une première conversion hétérodyne faite avec le produit (LO1-LO2), puis une deuxième conversion utilisant LO1.

En particulier, dans une application de l'invention à une machine Quantique, les modes de réalisation de l'invention permettent d'adresser un nombre élevé d'émetteurs-récepteurs à consommation nulle côté Qubit (se trouvant à une température de 1 Kelvin ou moins), voire à bilan énergétique positif avec une seule source et un seul médium dans un environnement incompatible avec les transmissions radio. Les modes de réalisation de l'invention permettent également d'adresser un grand nombre de Qubits tout en réduisant de façon significative le nombre de connections entre l'interface à température ambiante et l'interface à volume refroidi, ou zone cryogénique, où se trouve physiquement les Qubits, ce qui améliore l'efficacité énergétique de la machine Quantique.

Les modes de réalisation de l'invention permettent en outre de réaliser une machine Quantique utilisant 100 Qubits et plus, pouvant simultanément prendre 2¹⁰⁰ états sur une puce tout en garantissant une température proche du zéro absolu du côté Qubits.

Dans une application de l'invention à une machine Quantique, les modes de réalisation de l'invention fournissent, un système de transmission capable de transmettre toutes les informations de manipulation et de lecture de Qubits en utilisant un seul guide d'onde plastique, ce qui permet l'intégration globale des Qubits et leur adressage dans un petit volume avec une consommation énergétique faible.

Certains modes de réalisation, appliqués également à la machine Quantique, permettent une transmission multi-signaux bidirectionnelle dans un guide d'ondes plastique avec une émission-réception passive sur l'interface cryogénique (interface à 1 Kelvins ou moins) où un dispositif émetteur-récepteur comprenant un émetteur passif et un récepteur passif est contrôlé par un dispositif émetteur-récepteur du côté de la température ambiante.

Dans une application de l'invention aux objets connectés noyés dans l'infrastructure et l'usine 4.0, les modes de réalisation de l'invention permettent une transmission multi-signaux bidirectionnelle dans un guide d'ondes plastique reliant des capteurs à consommation énergétique nulle à une station de base.

Avantageusement, le lien à base de guide d'ondes plastique, selon les modes de réalisation de l'invention, est un lien totalement déséquilibré entre le premier dispositif émetteur-récepteur (se trouvant du côté température ambiante en application à la machine Quantique) et le second dispositif émetteur-récepteur (se trouvant du côté température cryogénique en application à la machine Quantique).

Dans une application de l'invention à une machine Quantique, les modes de réalisation de l'invention permettent avantageusement de remplacer les multi-liens coaxiaux par un seul lien plastique en réalisant un lien très haute fréquence, thermiquement complètement isolé et déséquilibré entre l'interface à température ambiante et l'interface cryogénique.

Les signaux de référence peuvent être réutilisés pour convertir le signal portant les signaux de manipulation de Qubits et traiter la remontée d'information de lecture de Qubits avec une conversion directe, ce qui permet de réduire les pertes dues aux mélangeurs passifs et diminuer le nombre de signaux à guider.

Il est également possible d'utiliser l'énergie fournie par les signaux venant de la base à température ambiante pour alimenter les dispositifs se trouvant dans la zone cryogénique.

Avantageusement, les modes de réalisation de l'invention permettent la descente de signaux de manipulation de Qubits de la zone à température ambiante à la zone à température cryogénique et la restitution de l'ensemble des signaux de manipulation.

Avantageusement, les modes de réalisation de l'invention permettent une intégration complète de la machine Quantique tout en réduisant la taille et les pertes thermiques.

L'utilisation d'un guide d'ondes plastique selon les modes de réalisation de l'invention permet d'utiliser des réseaux de capteurs complètement passifs, non limités par une durée de charge de batterie, dans des environnements isolés de l'extérieur et/ou fortement bruités par les interférences électromagnétiques.

Avantageusement, en émettant simultanément dans un guide d'onde plastique, les porteuses radio modulées par le signal utile et les signaux sinusoïdaux de référence, il est possible de transférer une multi-connectivité large bande en duplex, avec des récepteurs-émetteurs zéro-énergie coté Qubit (à une température de 1 Kelvin, ou moins), ou d'adresser des loT sans source d'énergie.

### Brève description des dessins

D'autres caractéristiques, détails et avantages de l'invention ressortiront à la lecture de la description faite en référence aux dessins annexés donnés à titre d'exemple et qui représentent, respectivement :
[Fig.1] La figure 1 est un schéma représentant un système pour la transmission bidirectionnelle d'une pluralité de signaux entre un premier dispositif émetteur-récepteur et un second dispositif émetteur-récepteur, selon certains modes de réalisation de l'invention.
[Fig. 2] La figure 2 est un schéma représentant un système pour la transmission bidirectionnelle d'une pluralité de signaux entre un premier dispositif émetteur-récepteur et un second dispositif émetteur-récepteur, selon certains modes de réalisation de l'invention.
[Fig. 3] La figure 3 est un schéma représentant un système pour la transmission bidirectionnelle d'une pluralité de signaux entre un premier dispositif émetteur-récepteur et un second dispositif émetteur-récepteur, selon d'autres modes de réalisation de l'invention.

### Description détaillée

Les modes de réalisation de l'invention fournissent un système pour la transmission bidirectionnelle d'une pluralité de signaux entre un premier dispositif émetteur-récepteur et un second dispositif émetteur-récepteur, les signaux pouvant avantageusement avoir des fréquences comprises entre 1 GHz et 10 THz.

Les modes de réalisation de l'invention peuvent être utilisés dans diverses applications comprenant, sans limitation, l'Internet des objets (loT ou Internet of Things en langue anglo-saxonne) noyés dans la matière ou dans l'infrastructure à consommation énergétique nulle (par exemple pour la transmission d'une pluralité de signaux entre un objet loT et un serveur loT ou une station de base), les transmissions à fortes interférences électromagnétiques (comme l'usine 4.0 ou l'internet des objets se trouvant dans un environnement subissant des fortes perturbations électromagnétiques ou dans les robots), et l'adressage de Qubits dans les machines Quantiques.

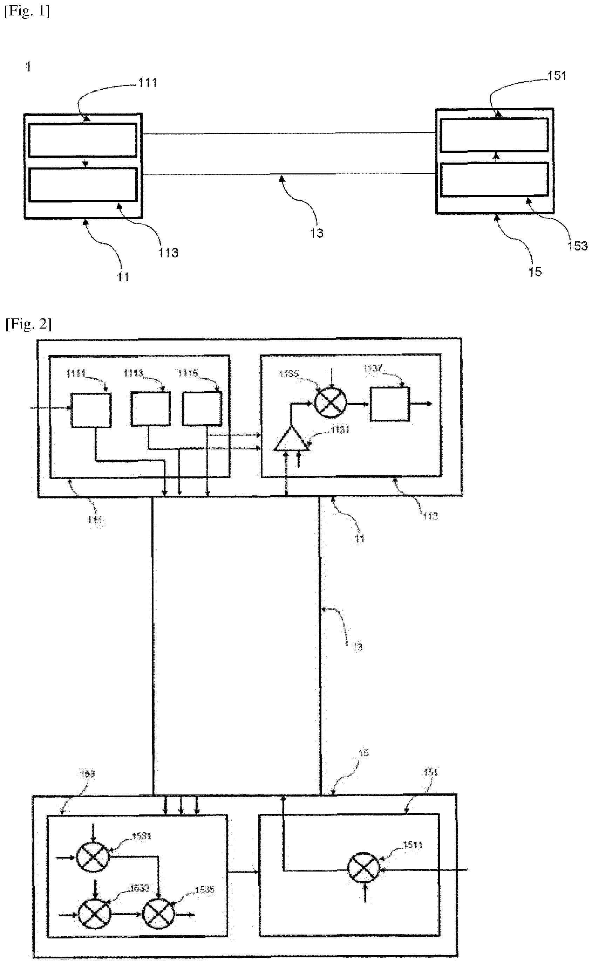

La figure 1 représente un système 1 pour la transmission bidirectionnelle d'une pluralité de signaux entre un premier dispositif émetteur-récepteur 11 et un second dispositif émetteur-récepteur 15 selon les modes de réalisation de l'invention.

La pluralité de signaux transférée entre le premier dispositif émetteur-récepteur 11 et le second dispositif émetteur-récepteur 15 comprend un signal porteur d'information utile et un ou plusieurs signaux de référence générés par un ou plusieurs oscillateurs locaux (désigné par LO).

Selon les modes de réalisation de l'invention, le premier dispositif émetteur-récepteur 11 comprend un émetteur radio de puissance multi-signaux 111 configuré pour générer des signaux de fréquences millimétriques et un récepteur radio de puissance multi-signaux 113 configuré pour restituer le signal porteur de l'information utile transmis par le second dispositif émetteur-récepteur 15.

Selon certains modes de réalisation, le second dispositif émetteur-récepteur 15 comprend un récepteur passif 153 à consommation énergétique nulle (aussi désigné par `récepteur multi-signaux sans consommation') configuré pour restituer le signal porteur de l'information utile transmis par le premier dispositif émetteur-récepteur 11 et un émetteur passif 151 à consommation énergétique nulle (aussi désigné par 'émetteur multi-signaux sans consommation') configuré pour émettre au moins un signal porteur de l'information utile au premier dispositif émetteur-récepteur 11.

Selon certains modes de réalisation, le système comprend un guide d'ondes plastique 13 reliant le premier dispositif émetteur-récepteur 11 au second dispositif émetteur-récepteur 15 pour guider la pluralité de signaux.

Selon certains modes de réalisation, un espacement fréquentiel au moins égal à la largeur de la bande de fréquence du signal porteur d'information utile peut être maintenu entre les fréquences associées à ladite pluralité de signaux.

Selon les applications de l'invention, un signal porteur d'information utile peut correspondre à un signal de manipulation ou de lecture de Qubits (en application à la machine Quantique), un signal de contrôle, ou un signal de réveil (en application à l'internet des objets et à l'usine 4.0 par exemples).

Selon certains modes de réalisation, la pluralité de signaux émise du premier dispositif émetteur-récepteur 11 au second dispositif émetteur-récepteur 15 peut comprendre un premier signal porteur d'information utile et un ou plusieurs signaux de référence. Selon ces modes de réalisation, l'émetteur radio de puissance multi-signaux 111 peut être configuré pour générer un premier signal désigné par *s*₁ et constitué par une première fréquence porteuse désignée par *F*_{*c*-1} modulée par un premier signal porteur d'information utile désigné par *Mod*₁ tel que le premier signal s'écrit sous la forme *s*₁ = *F*_{*c*-1} + *Mod*₁. L'émetteur radio de puissance multi-signaux 111 peut en outre comprendre un ou plusieurs oscillateurs locaux, chaque oscillateur local étant configuré pour générer un signal de référence désignant une sinusoïde de référence.

Selon certains modes de réalisation, un espacement fréquentiel au moins égal à la largeur de la bande de fréquence du premier signal porteur d'information utile peut être maintenu entre les fréquences des signaux de références et la fréquence du premier signal porteur d'information utile pour éviter la création d'interférence entre les différents signaux guidés dans le guide d'ondes plastique 13.

Après génération du premier signal *s*₁ et de l'un ou plusieurs signaux de référence, l'émetteur radio de puissance multi-signaux 111 peut être configuré pour transmettre les signaux générés au second dispositif émetteur-récepteur 15 à travers le guide d'ondes plastique 13 de façon simultanée. Les signaux de référence émis par l'émetteur radio de puissance multi-signaux 111 sont utilisés par le second dispositif émetteur-récepteur 15 pour restituer le premier signal porteur d'information utile sans avoir à redéfinir les sinusoïdes de référence. Plus précisément, le récepteur passif 153 est configuré pour recevoir le premier signal *s*₁ et l'un ou plusieurs signaux de référence émis par l'émetteur radio de puissance multi-signaux 111 et restituer le premier signal porteur d'information utile *Mod*₁ à travers une ou plusieurs conversions (désignées par 'conversions descendantes') en utilisant le premier signal *s*₁ et un ou plusieurs signaux de conversion déterminés à partir de l'un ou plusieurs signaux de référence.

Selon certains modes de réalisation, le récepteur passif 153 peut comprendre un ou plusieurs mélangeurs passifs configurés pour déterminer l'un ou plusieurs signaux de conversion et pour effectuer l'une ou plusieurs conversions descendantes.

Selon certains modes de réalisation, la pluralité de signaux émise du second dispositif émetteur-récepteur 15 au premier dispositif émetteur-récepteur 11 peut comprendre un second signal porteur d'information utile désigné par *Mod*₂*.* Selon ces modes de réalisation, l'émetteur passif 151 peut être configuré pour générer un second signal désigné par *s*₂ et constitué par une seconde fréquence porteuse désignée par *F*_{*c*-2} modulée par le second signal porteur d'information utile *Mod*₂ tel que le second signal s'écrit sous la forme *s*₂ = *F*_{*c*-2} + *Mod*₂*.* L'émetteur passif 151 peut être configuré pour générer le second signal *s*₂ à travers une ou plusieurs conversions (désignées par 'conversions montantes') du second signal porteur d'information utile en utilisant un ou plusieurs signaux de conversion directe dérivés de l'un ou plusieurs signaux de référence émis par l'émetteur radio de puissance multi-signaux 111, l'émetteur passif 151 étant configuré pour recevoir l'un ou plusieurs signaux de référence, déterminer un ou plusieurs signaux de conversion directe à partir dudit un ou plusieurs signaux de référence, et effectuer ladite une ou plusieurs conversions directes du second signal porteur d'information utile en utilisant l'un ou plusieurs signaux de conversion directe.

Selon certains modes de réalisation, l'émetteur passif 151 peut comprendre un ou plusieurs mélangeurs passifs configurés pour déterminer l'un ou plusieurs signaux de conversion directe et pour effectuer l'une ou plusieurs conversions directes.

Après génération du second signal *s*₂, l'émetteur passif 151 peut être configuré pour transmettre le second signal *s*₂ au premier dispositif émetteur-récepteur 11 à travers le guide d'ondes plastique 13. A la réception du second signal *s*₂, le récepteur radio de puissance multi-signaux 113 peut être configuré pour restituer le second signal porteur d'information utile *Mod*₂ à travers une ou plusieurs conversions du second signal *s*₂ en utilisant l'un ou plusieurs signaux de référence générés par l'émetteur radio de puissance multi-signaux 111, le récepteur radio de puissance multi-signaux 113 étant configuré pour recevoir ledit un ou plusieurs signaux de référence de l'émetteur radio de puissance multi-signaux 111.

Selon certains modes de réalisation, l'un ou plusieurs signaux de référence générés par l'émetteur radio de puissance multi-signaux 111 peuvent comprendre un premier signal de référence désigné par *s*_{*LO*-1} et un second signal de référence désigné par *s*_{*LO*-2}*.* Le premier signal de référence et le second signal de référence peuvent être générés en maintenant un espacement fréquentiel désigné par *IF* de manière à ce que la fréquence *F*_{*LO*2} du second signal de référence est espacée de la fréquence *F*_{*LO*1} du premier signal de référence de *IF,* c'est-à-dire *F*_{*LO*2} = *F*_{*LO*1} + *IF.* Le premier signal *s*₁ peut-être généré de manière à ce que l'espacement fréquentiel *IF* (aussi appelé 'fréquence intermédiaire') soit maintenu entre la première fréquence porteuse *F*_{*c*-1} et la fréquence du premier signal de référence et la fréquence du second signal de référence. Par exemple, le premier signal *s*₁ peut-être généré de manière à ce que la première fréquence porteuse *F*_{*c*-1} soit donnée par *F*_{*c*-1} = *F*_{*LO*2} *- IF* ou *F*_{*c*-1} = *F*_{*LO*2} + *IF.*

La figure 2 est un schéma représentant un système pour la transmission bidirectionnelle d'une pluralité de signaux entre le premier dispositif émetteur-récepteur 11 et le second dispositif émetteur-récepteur 15, selon certains modes de réalisation de l'invention dans lesquels l'un ou plusieurs signaux de référence générés par l'émetteur radio de puissance multi-signaux 111 comprennent un premier signal de référence et un second signal de référence.

En référence à la figure 2, l'émetteur radio de puissance multi-signaux 111 peut comprendre un générateur de signaux 1111 configuré pour recevoir le premier signal porteur d'information utile *Mod*₁ et générer le premier signal *s*₁ constitué par une première fréquence porteuse *F*_{*c*-1} modulée par le premier signal porteur d'information utile *Mod*₁*.* L'émetteur radio de puissance multi-signaux 111 peut en outre comprendre un premier oscillateur local 1113 configuré pour générer le premier signal de référence *s*_{*LO*-1} et un second oscillateur local 1115 configuré pour générer le second signal de référence *s*_{*LO*-2}*.* Les signaux radio millimétriques générés ont une puissance suffisante pour rejoindre le second dispositif émetteur-récepteur 15 après propagation dans le guide d'ondes plastique 13. Le premier signal de référence et le second signal de référence sont aussi envoyés au récepteur radio de puissance multi-signaux 113. Le premier signal de référence et le second signal de référence peuvent être utilisés par le récepteur passif 153 pour restituer le premier signal porteur d'information utile.

Le récepteur passif 153 peut être configuré pour recevoir le premier signal *s*₁, le premier signal de référence *s*_{*LO*-1} et le second signal de référence *s*_{*LO*-2}*.* Le récepteur passif 153 peut comprendre des mélangeurs passifs configurés pour déterminer un ou plusieurs signaux de conversion hétérodyne à partir du premier signal de référence et du second signal de référence et pour effectuer une ou plusieurs conversions hétérodynes pour du premier signal *s*₁ en utilisant l'un ou plusieurs signaux de conversion hétérodynes pour restituer le premier signal porteur d'information utile *Mod*₁. Plus précisément, en référence à la figure 2, le récepteur passif 153 peut comprendre trois mélangeurs passifs dont deux mélangeurs passifs configurés pour déterminer deux signaux de conversion hétérodynes à partir du premier signal de référence et du second signal de référence, et un mélangeur passif configuré pour effectuer une conversion hétérodyne pour restituer le premier signal porteur d'information utile. Le premier mélangeur passif 1531 peut être configuré pour recevoir le premier signal de référence ou le second signal de référence en fonction de l'emplacement de la première fréquence porteuse, le premier mélangeur passif 1531 étant configuré pour effectuer une première conversion hétérodyne en utilisant l'un du premier ou second signal de référence, ce qui permet de générer un premier signal de conversion désigné par *s*_{*c*1} = *IF* + *Mod.* Le second mélangeur passif 1533 peut être configuré pour déterminer un second signal de conversion hétérodyne à partir du premier signal de référence et du second signal de référence. Le second signal de conversion hétérodyne est le produit entre le premier signal de référence et le second signal de référence et est désigné par *s*_{*c*2} = *s*_{*LO*-2} - *s*_{*LO*-1}. Le troisième mélangeur 1535 peut être configuré pour effectuer une seconde conversion hétérodyne du premier signal de conversion hétérodyne en utilisant le second signal de conversion hétérodyne pour restituer le premier signal porteur d'information utile *Mod.*

Selon certains modes de réalisation, l'émetteur passif 151 peut être configuré pour recevoir un second signal porteur d'information utile *Mod*₂ et pour générer le second signal *s*₂ constitué par la seconde fréquence porteuse *F*_{*c*-2} modulée par le second signal porteur d'information utile *Mod*₂*.* L'émetteur passif 151 peut être configuré pour générer le second signal *s*₂ à travers une ou plusieurs conversions directes (désignées par 'conversions montantes') du second signal porteur d'information utile *Mod*₂ en utilisant le premier signal de référence et le second signal de référence émis par l'émetteur radio de puissance multi-signaux 111 et reçus par le second dispositif émetteur-récepteur 15. En référence à la figure 2, l'émetteur passif 151 peut comprendre un ou plusieurs mélangeurs passifs 1511 configurés pour recevoir le premier signal de référence et le second signal de référence et déterminer le second signal *s*₂ en effectuant une conversion directe du second signal porteur d'information utile en utilisant le premier signal de référence et le second signal de référence.

Après génération du second signal *s*₂, l'émetteur passif 151 peut être configuré pour transmettre le second signal *s*₂ au premier dispositif émetteur-récepteur 11 à travers le guide d'ondes plastique 13. A la réception du second signal *s*₂, le récepteur radio de puissance multi-signaux 113 peut être configuré pour restituer le second signal porteur d'information utile *Mod*₂ à travers une ou plusieurs conversions du second signal *s*₂ en utilisant le premier signal de référence et le second signal de référence reçus de l'émetteur radio de puissance multi-signaux 111. En référence à la figure 2, le récepteur radio de puissance multi-signaux 113 peut comprendre un amplificateur faible bruit large bande 1131 ayant une grande sensibilité et un fort gain configuré pour amplifier le second signal reçu. Le récepteur radio de puissance multi-signaux 113 peut en outre comprendre un mélangeur actif 1135 à gain de conversion complémentaire du gain de l'amplificateur 1131 configuré pour effectuer une conversion avec gain du second signal en utilisant le premier signal de référence et le second signal de référence, ce qui permet de restituer le second signal porteur d'information utile. Le récepteur radio de puissance multi-signaux 113 peut en outre comprendre un ensemble de filtres 1137 à gains variables configurés pour filtrer et amplifier le second signal porteur d'information utile restitué par le mélangeur actif 1135.

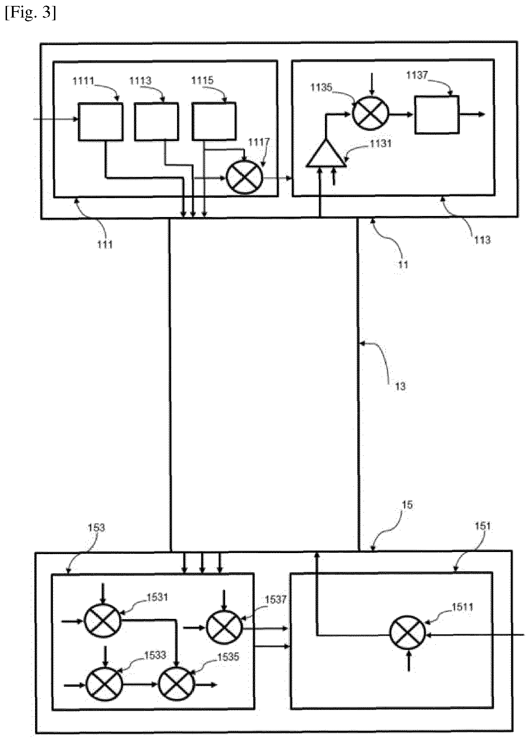

La figure 3 est un schéma représentant un système pour la transmission bidirectionnelle d'une pluralité de signaux entre le premier dispositif émetteur-récepteur 11 et le second dispositif émetteur-récepteur 15, selon certains modes de réalisation de l'invention dans lesquels l'un ou plusieurs signaux de référence générés par l'émetteur radio de puissance multi-signaux 111 comprennent un premier signal de référence et un second signal de référence et la génération du second signal à l'émetteur passif 151 utilise un signal de conversion déterminé à partir du premier signal de référence et du second signal de référence.

Selon ces modes de réalisation, le récepteur passif 153 peut en outre comprendre un mélangeur passif 1537 configuré pour déterminer un troisième signal de référence désigné par *s*_{*LO*-3} à partir du premier signal de référence et du second signal de référence, le troisième signal de référence *s*_{*LO*-3} peut par exemple s'écrire comme étant la somme du premier signal de référence et du second signal de référence, *s*_{*LO*-3} = *s*_{*LO*-1} + *s*_{*LO*-2}*.* Le troisième signal de référence peut être utilisé par l'émetteur passif 151 pour effectuer une conversion hétérodyne pour déterminer le second signal *s*₂.

Selon certains modes de réalisation, l'émetteur passif 151 peut être configuré pour recevoir le troisième signal de référence généré par le récepteur passif 153. L'émetteur passif 151 peut comprendre un mélangeur 1511 configuré pour générer le second signal *s*₂ constitué par la seconde fréquence porteuse *F*_{*c*-2} modulée par le second signal porteur d'information utile à travers une conversion directe du signal porteur d'information utile en utilisant le troisième signal de référence *s*_{*LO*-3}*.*

Selon ces modes de réalisation, l'émetteur radio de puissance multi-signaux 113 peut en outre comprendre un mélangeur passif 1117 configuré pour déterminer le troisième signal de référence à partir du premier signal de référence et du second signal de référence. Le récepteur de puissance multi-signaux 115 peut être configuré pour recevoir le troisième signal de référence de l'émetteur radio de puissance multi-signaux 113 et recevoir le second signal émis par l'émetteur passif 151, le récepteur de puissance multi-signaux 115 peut être configuré pour restituer le second signal porteur d'information utile à travers une conversion du second signal en utilisant le troisième signal de référence, la conversion étant effectuée par le mélangeur actif 1135.

Selon certains modes de réalisation, un mélangeur passif peut être un mélangeur passif à diodes. Des diodes de technologie de type III-V ou de type CMOS silicium peuvent être utilisées.

En application de l'invention à la machine Quantique, les modes de réalisation de l'invention permettent l'adressage de Qubits en utilisant un seul guide d'ondes plastique. Le système 1 peut être implémenté dans une machine quantique de manière à ce que le premier dispositif émetteur-récepteur 11 se trouve à une interface à température ambiante et le second dispositif émetteur-récepteur 13 se trouve à une interface à température cryogénique inférieure ou égale à 1 Kelvin. Le second dispositif émetteur-récepteur 15 comprend un émetteur et un récepteur passifs, sans consommation énergétique, ce qui permet de limiter les pertes joules. La distance séparant la zone à température ambiante et la zone à température cryogénique peut être de l'ordre d'un mètre. Le système 1 peut être utilisé pour transporter les signaux de manipulation de Qubits (dans une bande de fréquence pouvant aller jusqu'à 20 GHz) du côté température ambiante en utilisant un émetteur radio de fréquences millimétriques (par exemple comprises entre 50 GHz et 300 GHz) capable de porter une large bande de fréquences de 10 GHz et plus en émettant un signal de puissance radiée suffisante pour couvrir la distance entre la zone à température ambiante et la zone à température cryogénique inférieure ou égale à 1 Kelvins. Le système 1 peut en outre être utilisé pour remonter l'information de lecture de Qubits de l'émetteur passif aux fréquences millimétriques jusqu'au récepteur à température ambiante. Les porteuses des signaux de manipulation de Qubits et des signaux de lecture de Qubits sont espacées de manière à éviter l'interférence entre les signaux.

Selon ces modes de réalisation, la transmission de signaux du premier dispositif émetteur-récepteur 11 vers le second dispositif émetteur-récepteur 15 est désignée par la descente d'information de la zone à température ambiante vers la zone à température cryogénique. La transmission de signaux du second dispositif émetteur-récepteur 15 vers le premier dispositif émetteur-récepteur 11 est désignée par la montée d'information de la zone à température cryogénique vers la zone à température ambiante.

La pluralité de signaux émise par le premier dispositif émetteur-récepteur 11 au second dispositif émetteur-récepteur peut comprendre un ou plusieurs signaux de manipulation de Qubits. En particulier, le premier signal porteur d'information utile peut être formé d'un ensemble de signaux de manipulation nécessaires à la manipulation d'un nombre prédéfini de Qubits. Le spectre du signal formé peut ressembler à un peigne d'une largeur de bande prédéfinie et les signaux de manipulation de Qubits peuvent être générés par un générateur multifréquence (non illustré dans les figures 1 et 2). La pluralité de signaux de manipulation émise par le premier dispositif émetteur-récepteur 11 est reçue par le récepteur passif 15, le signal restitué peut être traité par un ou plusieurs filtres passifs de façon à séparer chaque fréquence de manipulation nécessaire au Qubit correspondant.

La pluralité de signaux émise par le second dispositif émetteur-récepteur 15 au premier dispositif émetteur-récepteur 11 peut comprendre un ou plusieurs signaux de lecture de Qubits. En particulier, le second signal porteur d'information utile peut être formé d'un ensemble de signaux de lecture de Qubits, recombinés sur une bande de fréquence large en utilisant un re-combineur passif (non illustré dans les figures 1 et 2).

Selon certains modes de réalisation en application à la machine quantique, les signaux de manipulation de Qubits peuvent former un spectre de type peigne d'une largeur supérieure ou égale à 10 GHz (par exemple 10 GHz ou 20 GHz). Les signaux de manipulation de Qubits constituent le premier signal porteur d'information utile, reçu en entrée de l'émetteur radio de puissance multi-signaux 111. Le premier signal de référence et le second signal de référence peuvent être des signaux ayant une fréquence supérieure à 50 GHz. Par exemple, le premier signal de référence peut avoir une fréquence de 70 GHz pour une bande de fréquence du signal porteur d'information utile de 10 GHz et une fréquence de 80 GHz pour une bande de fréquence du signal porteur d'information utile de 20 GHz. Le second signal de référence peut avoir une fréquence égale à 60 GHz pour une bande de fréquence du signal porteur d'information utile de 10 GHz ou de 20 GHz. Le premier signal *s*₁ peut avoir une fréquence de 80 GHz pour une bande de fréquence du signal porteur d'information utile de 10 GHz et une fréquence de 100 GHz pour une bande de fréquence du signal porteur d'information utile de 20 GHz. Le troisième signal de référence peut avoir une fréquence de 130 GHz pour une bande de fréquence du signal porteur d'information utile de 10 GHz et une fréquence égale à 140 GHz pour une bande de fréquence du signal porteur d'information utile de 20 GHz. Un signal porteur d'information utile désigne le signal de manipulation de Qubits ou le signal de lecture de Qubits.

L'invention n'est pas limitée aux modes de réalisation décrits ci-avant à titre d'exemple non limitatif. Elle englobe toutes les variantes de réalisation qui pourront être envisagées par l'homme du métier.

## Revendications

1. Système pour la transmission bidirectionnelle dans un guide d'onde plastique d'une pluralité de signaux, entre un premier dispositif émetteur-récepteur (11) et un second dispositif émetteur-récepteur (15), le système étant **caractérisé en ce que** :
- le premier dispositif émetteur-récepteur (11) est un dispositif émetteur-récepteur radio de puissance multi-signaux qui comprend :
- un émetteur radio de puissance (111) pour émettre simultanément dans le guide d'ondes plastique, un premier signal constitué par une première fréquence porteuse modulée par un premier signal porteur d'information utile, et un ou plusieurs signaux sinusoïdaux de référence ; et
- un récepteur radio de puissance (113) pour recevoir par le guide d'ondes plastique un second signal provenant du second dispositif émetteur-récepteur ;
et
- le second dispositif émetteur-récepteur (15) est un dispositif émetteur-récepteur multi-signaux sans consommation qui comprend :
- un récepteur passif (153) à consommation énergétique nulle, configuré pour :
- recevoir par le guide d'onde plastique le premier signal émis par le premier dispositif émetteur-récepteur ;
- déterminer un ou plusieurs signaux de conversion descendante, à partir d'un ou de plusieurs des signaux sinusoïdaux de référence reçus ;
- effectuer respectivement une ou plusieurs conversions descendantes dudit premier signal reçu avec respectivement un ou plusieurs des signaux de conversion descendante ; et
- restituer le premier signal porteur d'information utile ;
et
- un émetteur passif (151) à consommation énergétique nulle, configuré pour :
- déterminer un ou plusieurs signaux de conversion montante à partir d'un ou de plusieurs des signaux sinusoïdaux de référence reçus de l'émetteur radio de puissance ;
- effectuer respectivement une ou plusieurs conversions montantes d'un second signal porteur d'information utile avec respectivement un ou plusieurs des signaux de conversion montante ;
- générer un second signal, ledit second signal étant constitué par une seconde fréquence porteuse modulée par ledit second signal porteur d'information utile ; et
- émettre dans le guide d'onde plastique ledit second signal.

2. Système selon la revendication 1 dans lequel l'émetteur radio de puissance du premier dispositif comprend un ou plusieurs oscillateurs locaux, chaque oscillateur étant configuré pour générer un signal sinusoïdal de référence tel qu'un espacement fréquentiel est maintenu entre la fréquence du premier signal porteur d'information utile et chacun des fréquences des signaux sinusoïdaux de référence, ledit espacement fréquentiel étant au moins égal à la largeur de la bande de fréquence du premier signal porteur d'information utile, de manière à éviter la création d'interférence entre les différents signaux émis simultanément dans le guide d'ondes plastique.

3. Système selon la revendication 2 dans lequel le récepteur passif du second dispositif comprend un ou plusieurs mélangeurs passifs pour déterminer un ou plusieurs signaux de conversion hétérodyne à partir d'un ou de plusieurs des signaux sinusoïdaux de référence reçus et pour effectuer respectivement une ou plusieurs conversions hétérodynes descendantes dudit premier signal reçu.

4. Système selon l'une quelconque des revendications 1 à 3 dans lequel l'émetteur radio de puissance du premier dispositif comprend un premier oscillateur local pour générer un premier signal sinusoïdal de référence et un second oscillateur local pour générer une second signal sinusoïdal de référence, et dans lequel le récepteur passif du second dispositif comprend trois mélangeurs passifs, un premier mélangeur passif étant configuré pour effectuer une première conversion hétérodyne en utilisant le premier ou le second signal sinusoïdal de référence, un second mélangeur passif étant configuré pour déterminer un second signal de conversion hétérodyne à partir du premier signal de référence et du second signal de référence, et un troisième mélangeur passif étant configuré pour effectuer une seconde conversion hétérodyne du premier signal de conversion hétérodyne, en utilisant le second signal de conversion hétérodyne de manière à restituer le premier signal porteur d'information utile.

5. Système selon l'une quelconque des revendications 1 à 4 dans lequel l'émetteur passif du second dispositif comprend un ou plusieurs mélangeurs passifs pour déterminer un ou plusieurs signaux de conversion directe à partir dudit un ou plusieurs signaux sinusoïdaux de référence reçus et pour effectuer respectivement une ou plusieurs conversions directes montantes d'un second signal porteur d'information utile.

6. Système selon l'une quelconque des revendications 1 à 5 dans lequel le récepteur radio puissance du premier dispositif est configuré pour :
- recevoir par le guide d'onde plastique ledit second signal émis par le second dispositif émetteur-récepteur ;
- recevoir ledit un ou lesdits plusieurs signaux sinusoïdaux de référence générés par l'émetteur radio de puissance;
- effectuer une ou plusieurs conversions dudit second signal reçu avec respectivement un ou plusieurs desdits signaux sinusoïdaux de référence ; et
- restituer le second signal porteur d'information utile.

7. Système selon l'une quelconque des revendications 1 à 6 dans lequel le récepteur passif du second dispositif comprend un mélangeur passif configuré pour déterminer un troisième signal sinusoïdal de référence à partir d'un premier signal sinusoïdal de référence et d'un second signal sinusoïdal de référence, ledit troisième signal sinusoïdal de référence étant utilisé par l'émetteur passif du second dispositif pour effectuer une conversion hétérodyne du second signal porteur d'information utile et générer ledit second signal.

8. Système selon la revendication 7 dans lequel ledit troisième signal sinusoïdal de référence est utilisé par l'émetteur passif pour effectuer une conversion directe du second signal porteur d'information utile et générer ledit second signal.

9. Système selon la revendication 7 ou 8 dans lequel l'émetteur passif du second dispositif est configuré pour émettre ledit second signal au récepteur radio de puissance du premier dispositif, et dans lequel ledit récepteur radio de puissance est configuré pour recevoir ledit troisième signal sinusoïdal de référence de l'émetteur radio de puissance et pour restituer ledit second signal porteur d'information utile à travers une conversion dudit second signal en utilisant ledit troisième signal sinusoïdal de référence.

10. Système selon l'une quelconque des revendications précédentes, **caractérisé en ce que** le système est implémenté dans une machine quantique, ledit premier dispositif émetteur-récepteur (11) se trouvant à une interface à température ambiante, ledit second dispositif émetteur-récepteur (15) se trouvant à une interface à température cryogénique inférieure ou égale à 1 Kelvin, ladite pluralité de signaux comprenant un ou plusieurs signaux de manipulation de Qubits et/ou un ou plusieurs signaux de lecture de Qubits.

11. Système selon la revendication 1 dans lequel :
- le premier dispositif émetteur-récepteur (11) est un dispositif émetteur-récepteur radio de puissance qui comprend un émetteur radio de puissance (111) pour émettre dans le guide d'ondes plastique de manière simultanée un premier signal constitué par une première fréquence porteuse modulée par un premier signal porteur d'information utile, et un ou plusieurs signaux sinusoïdaux de référence ;
et
- le second dispositif émetteur-récepteur (15) est un dispositif émetteur-récepteur multi-signaux sans consommation qui comprend un récepteur passif (153) configuré pour recevoir par le guide d'onde plastique les signaux émis par le premier émetteur-récepteur, et pour restituer le premier signal porteur d'information utile à travers une ou plusieurs conversions hétérodynes descendantes dudit premier signal reçu par respectivement un ou plusieurs signaux de conversion hétérodyne déterminés à partir d'un ou plusieurs signaux sinusoïdaux de référence reçus.

12. Système selon la revendication 1 dans lequel :
- le premier dispositif émetteur-récepteur (11) est un dispositif émetteur-récepteur radio de puissance qui comprend :
- un émetteur radio de puissance (111) pour émettre dans le guide d'ondes plastique de manière simultanée au moins un ou plusieurs signaux sinusoïdaux de référence ; et
- un récepteur radio de puissance (113) pour recevoir par le guide d'ondes plastique un second signal provenant du second dispositif émetteur-récepteur ;
et
- le second dispositif émetteur-récepteur (15) est un dispositif émetteur-récepteur multi-signaux sans consommation qui comprend :
- un récepteur passif (153) configuré pour recevoir par le guide d'onde plastique lesdits au moins un ou plusieurs signaux sinusoïdaux de référence émis par le premier émetteur-récepteur; et
- un émetteur passif (151) configuré pour émettre dans le guide d'onde plastique ledit second signal, ledit second signal étant constitué par une seconde fréquence porteuse modulée par un second signal porteur d'information utile, à travers une ou plusieurs conversions hétérodynes montantes dudit second signal porteur d'information utile par respectivement un ou plusieurs signaux de conversion hétérodyne déterminés à partir d'un ou de plusieurs desdits signaux sinusoïdaux de référence reçus par ledit récepteur passif.

## Patentansprüche

1. System zur bidirektionalen Übertragung, in einem Kunststoffwellenleiter, einer Vielzahl von Signalen zwischen einem ersten Transceiver-Gerät (11) und einem zweiten Transceiver-Gerät (15), wobei das System **dadurch gekennzeichnet ist, dass**:
- das erste Transceiver-Gerät (11) ein Multisignal-Leistungsfunk-Transceiver-Gerät ist, das Folgendes umfasst:
- einen Leistungsfunksender (111) zum gleichzeitigen Senden, in dem Kunststoffwellenleiter, eines ersten Signals gebildet durch eine durch ein erstes Nutzdatenträgersignal modulierte erste Trägerfrequenz und ein oder mehrere sinusförmige Referenzsignale; und
- einen Leistungsfunkempfänger (113) zum Empfangen, über den Kunststoffwellenleiter, eines vom zweiten Transceiver-Gerät kommenden zweiten Signals;
und
- das zweite Transceiver-Gerät (15) ein verbrauchsfreies Multisignal-Transceiver-Gerät ist, das Folgendes umfasst:
- einen energieverbrauchsfreien passiven Empfänger (153), konfiguriert zum:
- Empfangen, über den Kunststoffwellenleiter, des ersten vom ersten Transceiver-Gerät gesendeten Signals;
- Bestimmen eines oder mehrerer Abwärtswandlungssignale von einem oder mehreren der empfangenen sinusförmigen Referenzsignale;
- Durchführen von jeweils einer oder mehreren Abwärtswandlungen des ersten empfangenen Signals mit jeweils einem oder mehreren der Abwärtswandlungssignale; und
- Wiederherstellen des ersten Nutzdatenträgersignals; und
- einen energieverbrauchsfreien passiven Sender (151), konfiguriert zum:
- Bestimmen eines oder mehrerer Aufwärtswandlungssignale von einem oder mehreren der vom Leistungsfunksender empfangenen sinusförmigen Referenzsignale;
- Durchführen jeweils einer oder mehrerer Aufwärtswandlungen eines zweiten Nutzdatenträgersignals mit jeweils einem oder mehreren der Aufwärtswandlungssignale;
- Erzeugen eines zweiten Signals, wobei das zweite Signal durch eine durch das zweite Nutzdatenträgersignal modulierte zweite Trägerfrequenz gebildet wird; und
- Senden des zweiten Signals in dem Kunststoffwellenleiter.

2. System nach Anspruch 1, wobei der Leistungsfunksender des ersten Geräts einen oder mehrere lokale Oszillatoren umfasst, wobei jeder Oszillator zum Erzeugen eines sinusförmigen Referenzsignals konfiguriert ist, so dass ein Frequenzabstand zwischen der Frequenz des ersten Nutzdatenträgersignals und jeder der Frequenzen der sinusförmigen Referenzsignale aufrechterhalten wird, wobei der Frequenzabstand mindestens gleich der Breite des Frequenzbandes des ersten Nutzdatenträgersignals ist, um die Entstehung von Interferenzen zwischen den verschiedenen gleichzeitig in dem Kunststoffwellenleiter gesendeten Signalen zu vermeiden.

3. System nach Anspruch 2, wobei der passive Empfänger des zweiten Geräts einen oder mehrere passive Mischer zum Bestimmen eines oder mehrerer Heterodyn-Wandlungssignale von einem oder mehreren der empfangenen sinusförmigen Referenzsignale und zum Durchführen jeweils einer oder mehrerer Heterodyn-Abwärtswandlungen des ersten empfangenen Signals umfasst.

4. System nach einem der Ansprüche 1 bis 3, wobei der Leistungsfunksender des ersten Geräts einen ersten lokalen Oszillator zum Erzeugen eines ersten sinusförmigen Referenzsignals und einen zweiten lokalen Oszillator zum Erzeugen eines zweiten sinusförmigen Referenzsignals umfasst, und wobei der passive Empfänger des zweiten Geräts drei passive Mischer umfasst, wobei ein erster passiver Mischer zum Durchführen einer ersten Heterodyn-Wandlung durch Verwendung des ersten oder des zweiten sinusförmigen Referenzsignals konfiguriert ist, ein zweiter passiver Mischer zum Bestimmen eines zweiten Heterodyn-Wandlungssignals von dem ersten Referenzsignal und dem zweiten Referenzsignal konfiguriert ist, und ein dritter passiver Mischer zum Durchführen einer zweiten Heterodyn-Wandlung des ersten Heterodyn-Wandlungssignals durch Verwendung des zweiten Heterodyn-Wandlungssignals zum Wiederherstellen des ersten Nutzdatenträgersignals konfiguriert ist.

5. System nach einem der Ansprüche 1 bis 4, wobei der passive Sender des zweiten Geräts einen oder mehrere passive Mischer zum Bestimmen eines oder mehrerer Direktwandlungssignale von den ein oder mehreren empfangenen sinusförmigen Referenzsignalen und zum Durchführen jeweils einer oder mehrerer Direktaufwärtswandlungen eines zweiten Nutzdatenträgersignals umfasst.

6. System nach einem der Ansprüche 1 bis 5, wobei der Leistungsfunkempfänger des ersten Geräts konfiguriert ist zum:
- Empfangen, über den Kunststoffwellenleiter, des vom zweiten Transceiver-Gerät gesendeten zweiten Signals;
- Empfangen der ein oder mehreren vom Leistungsfunksender erzeugten sinusförmigen Referenzsignale;
- Durchführen einer oder mehrerer Wandlungen des empfangenen zweiten Signals mit jeweils einem oder mehreren der sinusförmigen Referenzsignale; und
- Wiederherstellen des zweiten Nutzdatenträgersignals.

7. System nach einem der Ansprüche 1 bis 6, wobei der passive Empfänger des zweiten Geräts einen passiven Mischer umfasst, der zum Bestimmen eines dritten sinusförmigen Referenzsignals von einem ersten sinusförmigen Referenzsignal und einem zweiten sinusförmigen Referenzsignals konfiguriert ist, wobei das dritte sinusförmige Referenzsignal vom passiven Sender des zweiten Geräts zum Durchführen einer Heterodyn-Wandlung des zweiten Nutzdatenträgersignals und zum Erzeugen des zweiten Signals verwendet wird.

8. System nach Anspruch 7, wobei das dritte sinusförmige Referenzsignal von dem passiven Sender zum Durchführen einer Direktwandlung des zweiten Nutzdatenträgersignals und zum Erzeugen des zweiten Signals verwendet wird.

9. System nach Anspruch 7 oder 8, wobei der passive Sender des zweiten Geräts zum Senden des zweiten Signals zum Leistungsfunkempfänger des ersten Geräts konfiguriert ist, und wobei der Leistungsfunkempfänger zum Empfangen des dritten sinusförmigen Referenzsignals vom Leistungsfunksender und zum Wiederherstellen des zweiten Nutzdatenträgersignals durch eine Wandlung des zweiten Signals durch Verwendung des dritten sinusförmigen Referenzsignals konfiguriert ist.

10. System nach einem der vorhergehenden Ansprüche, **dadurch gekennzeichnet, dass** das System in einer Quantenmaschine implementiert ist, wobei sich das erste Transceiver-Gerät (11) an einer Schnittstelle bei Raumtemperatur befindet, das zweite Transceiver-Gerät (15) sich an einer Schnittstelle bei einer kryogenen Temperatur von gleich 1 Kelvin oder weniger befindet, wobei die Vielzahl von Signalen ein oder mehrere Qubit-Manipulationssignale und/oder ein oder mehrere Qubit-Lesesignale umfasst.

11. System nach Anspruch 1, wobei:
- das erste Transceiver-Gerät (11) ein Leistungsfunk-Transceiver-Gerät ist, das einen Leistungsfunksender (111) zum gleichzeitigen Senden, in dem Kunststoffwellenleiter, eines ersten Signals gebildet aus einer durch ein erstes Nutzdatenträgersignal modulierten ersten Trägerfrequenz und einem oder mehreren sinusförmigen Referenzsignalen umfasst;
und
- das zweite Transceiver-Gerät (15) ein verbrauchsfreies Multisignal-Transceiver-Gerät ist, das einen passiven Empfänger (153) umfasst, konfiguriert zum Empfangen, über den Kunststoffwellenleiter, der vom ersten Transceiver gesendeten Signale und zum Wiederherstellen des ersten Nutzdatenträgersignals durch eine oder mehrere Heterodyn-Abwärtswandlungen des ersten empfangenen Signals durch jeweils ein oder mehrere Heterodyn-Umwandlungssignale, die von einem oder mehreren empfangenen sinusförmigen Referenzsignalen bestimmt werden.

12. System nach Anspruch 1, wobei:
- das erste Transceiver-Gerät (11) ein Leistungsfunk-Transceiver-Gerät ist, das Folgendes umfasst:
- einen Leistungsfunksender (111) zum gleichzeitigen Senden, in dem Kunststoffwellenleiter, von mindestens einem oder mehreren sinusförmigen Referenzsignalen; und
- einen Leistungsfunkempfänger (113) zum Empfangen, über den Kunststoffwellenleiter, eines zweiten Signals vom zweiten Transceiver-Gerät;
und
- das zweite Transceiver-Gerät (15) ein verbrauchsfreies Multisignal-Transceiver-Gerät ist, das Folgendes umfasst:
- einen passiven Empfänger (153), der zum Empfangen, über den Kunststoffwellenleiter, der vom ersten Transceiver gesendeten mindestens ein oder mehreren sinusförmigen Referenzsignale konfiguriert ist; und
- einen passiven Sender (151), der zum Senden, in dem Kunststoffwellenleiter, des zweiten Signals, wobei das zweite Signal von einer zweiten durch ein zweites Nutzdatenträgersignal modulierten Trägerfrequenz gebildet wird, durch eine oder mehrere Heterodyn-Aufwärtswandlungen des zweiten Nutzdatenträgersignals durch jeweils ein oder mehrere Heterodyn-Wandlungssignale konfiguriert ist, die aus einem oder mehreren der vom passiven Empfänger empfangenen sinusförmigen Referenzsignale bestimmt werden.

## Claims

1. A system for bidirectional transmission, in a plastic waveguide, of a plurality of signals between a first transceiver device (11) and a second transceiver device (15), the system being **characterised in that**:
- the first transceiver device (11) is a multisignal power radio transceiver device which comprises:
- a power radio transmitter (111) for simultaneously transmitting, in the plastic waveguide, a first signal composed of a first carrier frequency modulated by a first payload carrier signal, and one or more reference sinusoidal signals; and
- a power radio receiver (113) for receiving, via the plastic waveguide, a second signal originating from the second transceiver device;
and
- the second transceiver device (15) is a multisignal transceiver device with no energy consumption which comprises:
- a passive receiver (153) with zero energy consumption, configured to:
- receive, via the plastic waveguide, the first signal transmitted by the first transceiver device;
- determine one or more downconversion signals, from one or more reference sinusoidal signals received;
- respectively perform one or more downconversions of said first signal received with, respectively, one or more of the downconversion signals; and
- return the first payload carrier signal; and
- a passive transmitter (151) with zero energy consumption, configured to:
- determine one or more upconversion signals from one or more of the reference sinusoidal signals received from the power radio transmitter;
- respectively perform one or more upconversions of a second payload carrier signal with, respectively, one or more of the upconversion signals;
- generate a second signal, said second signal being composed of a second carrier frequency modulated by said second payload carrier signal; and
- transmit said second signal in the plastic waveguide.

2. The system according to claim 1, wherein the power radio transmitter of the first device comprises one or more local oscillators, each oscillator being configured to generate a reference sinusoidal signal such that a frequency spacing is maintained between the frequency of the first payload carrier signal and each of the frequencies of the reference sinusoidal signals, said frequency spacing being at least equal to the width of the frequency band of the first payload carrier signal, so as to avoid the creation of interference between the different signals transmitted simultaneously in the plastic waveguide.

3. The system according to claim 2, wherein the passive receiver of the second device comprises one or more passive mixers for determining one or more heterodyne conversion signals from one or more of the reference sinusoidal signals received and for performing, respectively, one or more heterodyne downconversions of said first signal received.

4. The system according to any one of claims 1 to 3, wherein the power radio transmitter of the first device comprises a first local oscillator for generating a first reference sinusoidal signal and a second local oscillator for generating a second reference sinusoidal signal, and wherein the passive receiver of the second device comprises three passive mixers, a first passive mixer being configured to perform a first heterodyne conversion by using the first or the second reference sinusoidal signal, a second passive mixer being configured to determine a second heterodyne conversion signal from the first reference signal and from the second reference signal, and a third passive mixer being configured to perform a second heterodyne conversion of the first heterodyne conversion signal, by using the second heterodyne conversion signal so as to return the first payload carrier signal.

5. The system according to any one of claims 1 to 4, wherein the passive transmitter of the second device comprises one or more passive mixers for determining one or more direct conversion signals from said one or more reference sinusoidal signals received and for performing, respectively, one or more direct upconversions of a second payload carrier signal.

6. The system according to any one of claims 1 to 5, wherein the power radio receiver of the first device is configured to:
- receive, via the plastic waveguide, said second signal transmitted by the second transceiver device;
- receive said one or more reference sinusoidal signals generated by the power radio transmitter;
- perform one or more conversions of said second signal received with, respectively, one or more of said reference sinusoidal signals; and
- return the second payload carrier signal.

7. The system according to any one of claims 1 to 6, wherein the passive receiver of the second device comprises a passive mixer configured to determine a third reference sinusoidal signal from a first reference sinusoidal signal and from a second reference sinusoidal signal, said third reference sinusoidal signal being used by the passive transmitter of the second device to perform a heterodyne conversion of the second payload carrier signal and generate said second signal.

8. The system according to claim 7, wherein said third reference sinusoidal signal is used by the passive transmitter to perform a direct conversion of the second payload carrier signal and generate said second signal.

9. The system according to claim 7 or 8, wherein the passive transmitter of the second device is configured to transmit said second signal to the power radio receiver of the first device, and wherein said power radio receiver is configured to receive said third reference sinusoidal signal from the power radio transmitter and to return said second payload carrier signal through a conversion of said second signal by using said third reference sinusoidal signal.

10. The system according to any one of the preceding claims, **characterised in that** the system is implemented in a quantum machine, said first transceiver device (11) being located at an interface at ambient temperature, said second transceiver device (15) being located at an interface at a cryogenic temperature less than or equal to 1 Kelvin, said plurality of signals comprising one or more Qubit manipulation signals and/or one or more Qubit read signals.

11. The system according to claim 1, wherein:
- the first transceiver device (11) is a power radio transceiver device which comprises a power radio transmitter (111) for simultaneously transmitting, in the plastic waveguide, a first signal composed of a first carrier frequency modulated by a first payload carrier signal, and one or more reference sinusoidal signals;
and
- the second transceiver device (15) is a multisignal transceiver device with no energy consumption which comprises a passive receiver (153) configured to receive, via the plastic waveguide, the signals transmitted by the first transceiver, and to return the first payload carrier signal through one or more heterodyne downconversions of said first signal received by, respectively, one or more heterodyne conversion signals determined from one or more reference sinusoidal signals received.

12. The system according to claim 1, wherein:
- the first transceiver device (11) is a power radio transceiver device which comprises:
- a power radio transmitter (111) for simultaneously transmitting, in the plastic waveguide, at least one or more reference sinusoidal signals; and
- a power radio receiver (113) for receiving, via the plastic waveguide, a second signal originating from the second transceiver device;
and
- the second transceiver device (15) is a multisignal transceiver device with no energy consumption which comprises:
- a passive receiver (153) configured to receive, via the plastic waveguide, said at least one or more reference sinusoidal signals transmitted by the first transceiver; and
- a passive transmitter (151) configured to transmit said second signal in the plastic waveguide, said second signal being composed of a second carrier frequency modulated by a second payload carrier signal, through one or more heterodyne upconversions of said second payload carrier signal by, respectively, one or more heterodyne conversion signals determined from one or more of said reference sinusoidal signals received by said passive receiver.
